# EUROPEAN PATENT APPLICATION

(11) **EP 4 131 171 A2**
(43) Date of publication of application: **08.02.2023**
(21) Application number: 22186426.7
(22) Date of filing: 22.07.2022
(51) Int. Cl.: G06T 17/00, G06V 20/64, G06V 20/70, G06F 30/12, G06F 30/27, G06F 113/12, G06F 119/18

(54) **COMPUTER IMPLEMENTED METHODS FOR GENERATING AND APPLYING GARMENT FINISH PRESETS**

(30) Priority: 04.08.2021 US 202117393849
(71) Applicant: Clothing Tech LLC, Austin, TX 78750 (US)
(72) Inventor: WILCOX, William, Austin, TX 78735 (US)
(74) Representative: Kaminski Harmann

(57) **Abstract**

The invention relates to computer implemented methods for generating a garment finish preset comprising assembly instructions for a garment finish for a garment to be fabricated, for automatically generating a garment finish preset comprising assembly instructions for a garment finish for a garment to be fabricated, and for automatically determining at least one candidate from a plurality of garment finish presets, each of said garment finish presets comprising assembly instructions for a garment finish for a garment to be fabricated from garment panels.

## Description

### FIELD OF THE INVENTION

The present invention relates to a computer implemented methods for generating 3D garment models at least in part. Specifically, a fourth method is disclosed for generating a garment finish preset comprising assembly instructions for a garment finish for a garment to be fabricated, a fifth method is disclosed for automatically generating a garment finish preset comprising assembly instructions for a garment finish for a garment to be fabricated, and a sixth method is disclosed for automatically determining at least one candidate from a plurality of garment finish presets, each of said garment finish presets comprising assembly instructions for a garment finish for a garment to be fabricated from garment panels.

### BACKGROUND OF THE INVENTION

In the garment industry, it is a common process to import a garment pattern, i.e. a collection of 2D drawings of the panels of the garment, into a Computer Aided Design (CAD) program on a computer in order to manually assemble the garment with a computer mouse. Each piece is dragged over an avatar and rotated and moved into roughly its correct pose on the avatar, which can be done in 3D or in a 2D projection of the avatar. After the pieces are roughly orientated and placed around the avatar, the edges where the single panels are to be connected need to be selected manually. These process steps are very tedious and take a long time.

It is also the current state of the art that the technical definition of a garment is specified in two or more documents. One document is the garment pattern as mentioned above (often a 2D CAD model in DXF format) containing the pattern shapes and used for cutting out the different garment panels from cloth that are then assembled into a garment. Another document is a file or a set of files that contain assembly instructions and other details in a human readable format such as an Excel spread sheet or a PDF file. These kind of documents defining the garment are often referred to as a "Tech Pack". The human readable instructions usually contain information about which fabric to use, what colors, what thread and stitch types, what finishes, what trims (buttons, zippers, hooks, etc.) to process, and so on. Also size measurements in a chart for the different sizes of garments to be produced may be comprised by the "Tech Pack". Contrary to the garment pattern, which depending on its file format (and whether it is digitally available at all), said assembly instructions are indeed not machine-readable because they address the human reader.

The state of the garment industry today is further that there are millions of "Tech Packs" (garment patterns and assembly instructions) but very few corresponding 3D virtual garments, which are sometimes also referred to as "Garment Digital Twins" (GDT). This is because the conversion is manual and tedious to convert from what the industry has (patterns and tech packs) into 3D models. GDT is synonymously used herein for 3D garment model.

In general, there is a desire in the industry to provide garment designers with three-dimensional models of garments so that they can check or validate the design of the garment. The garment design is a very tedious process with many iterative steps usually starting with perspective sketches and subsequent estimations of 2D pattern shapes based on experience and knowledge. A first sample is manufactured which is inspected by the designer who then corrects the garment patterns again based on his experience. A second sample verifies the changes and the process can continue like this until a garment is manufactured that meets the designer's expectations.

Furthermore, garment designers may want to update a garment design by amending an existing GDT on a three-dimensional virtual graphical user interface. It is therefore desirable to not start the design process from zero, but to have a predecessor model, e.g. a pre-season design, as a basis.

3D "Garment Digital Twins" are further of an increasing interest for the industry as they can be used to illustrate the garment, e.g. on a website, without the need for expensive and elaborate photo shootings. Once a GDT is at hand, it can be displayed in different poses, colors, sizes, and worn by different avatars or hangers. As well, the GDTs can be illustrated in a virtual fitting room where a customer can provide a three-dimensional representation of himself and virtually "try on" several different garments in different styles and sizes.

Of particular interest is the way a garment is to be finished which is defined at least by assembly steps to be applied in order to finish the garment in the desired way and optionally also by additional pieces to be connected to the garment. For example, a finish feature that does not involve an extra part would be a dart incorporated into the back of a shirt or a hem on the bottom opening of a pair of jeans, and a finish feature that does involve extra parts would be a collar with a collar stand for a shirt. These finishes are so important because they ultimately define the garment design and appearance. The designers thus spend a lot of time working on the finishes in the 3D design software to bring the finishes to perfection for every individual garment. There is therefore need for simplification and computer-based support for the generation and application of garment finishes.

### OBJECT OF THE INVENTION

Therefore, the invention provides computer implemented methods that help overcoming this vast backlog demand. Methods according to the invention allow for reductions of working time and man power.

### SUMMARY OF THE INVENTION

The invention relates to a fourth computer implemented method, with program code being stored on a machine readable medium or embodied as an electromagnetic wave, for generating a garment finish preset comprising assembly instructions for a garment finish for a garment to be fabricated, the computer implemented method comprising:
providing a virtual 3D environment with a graphical user interface (GUI) configured to receive first user input,
providing a plurality of design tools operatively linked with the virtual 3D environment and configured to receive second user input,
based on the first and second user input, generating the garment finish preset, wherein the second user input relates to what garment finish parts are comprised by the garment finish and what assembly steps are involved in manufacturing the garment finish from the garment finish parts, and wherein the first user input relates to parametrical alterations of the garment finish parts,
saving the generated garment finish preset, and
rendering the garment finish preset retrievable so that it is applicable to a garment model loaded into the virtual 3D environment.

In some embodiments, the computer implemented method further comprises
loading the garment model into the virtual 3D environment,
retrieving the garment finish preset, and
one of
   loading into the virtual 3D environment a set of pre-assembled garment finish parts contained by the garment finish preset, and
   virtually assembling the garment finish parts at a predefined or selected location within the garment model based on third user input, wherein the GUI is configured to receive the third user input, and wherein the third user input relates to where and how the garment finish parts is connected to the garment model.

In some embodiments, the computer implemented method further comprises defining panel boundary counter-parameter based on the third user input.

In some embodiments, the garment finish preset comprises representation of seams to be placed at dedicated locations within at least one of a garment finish part comprised by the garment finish preset and the garment model.

In some embodiments, the garment finish preset contains representation of hems to be placed at openings of at least one of a garment finish part comprised by the garment finish preset and the garment model.

In some embodiments, the garment finish parts comprised by the garment finish preset represent at least one of a collar, a cuff, revers, lapel, a pocket, a belt hook, and a cowl.

In some embodiments, the garment finish preset contains representation of at least one of a button, a buttonhook, a buttonhole, a button tape, a snap fastener, a zipper, a touch fastener, a magnetic fastener, a hook, a loop for a hook or a button, a cord fastener, and laces.

In some embodiments, the garment finish preset contains representation of at least one of a dart and a pleat.

In some embodiments, the computer implemented method further comprises
initiating the generation of the garment finish preset by receiving an initiation input via the GUI or the design tools, wherein generating the garment finish preset is based on recording the first and second user inputs from the moment the initiation input is received, and
finalizing the generation of the garment finish preset by receiving a finalization input via the GUI or the design tools, wherein recording the first and second user inputs is stopped from the moment the finalization input is received.

In some embodiments, the design tools comprise a plurality of reshaping tools configured to reshape a garment finish part.

In some embodiments, the design tools comprise a plurality of design tool selection menus.

In some embodiments, at least one of the design tool selection menus comprise one of a thread color selection menu, a stitch pattern selection menu, a size selection menu, a part selection menu, a cloth type selection menu, a cloth color selection menu, and a part style menu.

The invention further relates to a fifth computer implemented method, with program code being stored on a machine readable medium or embodied as an electromagnetic wave, for automatically generating a garment finish preset comprising assembly instructions for a garment finish for a garment to be fabricated, the computer implemented method comprising:
providing at least one document comprising at least one of a drawing and human-readable garment finishing instructions for finishing the garment,
determining, with an extraction algorithm, at least one garment finish feature from the at least one document, the garment finish feature corresponding to an additional garment component or a garment property,
generating a garment finish preset by translating the at least one garment finish feature into data that represent what garment finish parts are comprised by the garment finish and what assembly steps are involved in manufacturing the garment finish from the garment finish parts,
saving the generated garment finish preset, and
rendering the garment finish preset retrievable so that it is applicable to a garment model loaded into a virtual 3D environment.

In some embodiments, generating the garment finish preset comprises virtually assembling the garment finish parts comprised by the garment finish preset based on the determined at least one garment finish feature.

In some embodiments, the computer implemented method further comprises
loading a garment model into the virtual 3D environment,
retrieving the garment finish preset, and
one of
   loading into the virtual 3D environment a set of pre-assembled garment finish parts contained by the garment finish preset, and
   virtually assembling the garment finish parts at a predefined or selected location within the garment model.

In some embodiments, the at least one garment finish feature is indicative for a position and an orientation of the respective additional garment component or garment property within a garment.

In some embodiments, the extraction algorithm comprises at least one of a pattern recognition algorithm and a text interpreter.

In some embodiments, the extraction algorithm is trainable based on user feedback.

In some embodiments, for determining the at least one garment finish feature, the extraction algorithm is configured for analyzing the at least one document with respect to at least one of: textual information, numerical information, image data, arrows, size data, color swatches, color indicators, stitch types, stitch designations, and a 2D/3D interpretation of the drawing.

In some embodiments, the computer implemented method further comprises determining, with the extraction algorithm, a garment type indicator from the at least one document, the garment type indicator representing a type of the garment that the garment finish belongs to and being one of a plurality of garment type indicators stored on the machine readable medium.

In some embodiments, for determining a garment type indicator, the extraction algorithm is configured for analyzing at least one of
a shape depicted in the at least one drawing,
a technical term contained in the human-readable garment finishing instructions, and
at least one of textual and numerical information associated with the at least one drawing, and
whether the garment finish parts are symmetrical or not.

The invention further relates to a sixth computer implemented method, with program code being stored on a machine readable medium or embodied as an electromagnetic wave, for automatically determining at least one candidate from a plurality of garment finish presets, each of said garment finish presets comprising assembly instructions for a garment finish for a garment to be fabricated from garment panels, the computer implemented method comprising
providing at least one of
at least one document comprising at least one 2D pattern piece representing the garment panels and
a 3D garment model representing the garment and comprising at least one 3D panel model;
based on at least one of said at least one 2D pattern piece, said 3D garment model, and said at least one 3D panel model, determining with an identification algorithm
a garment type indicator representing a type of the garment and being one of a plurality of garment type indicators, and
at least one panel type indicator representing a type of the 2D pattern piece or representing a type of the 3D panel model;
determ ining the at least one candidate from the plurality of garment finish presets based on the determined garment type indicator and the at least one panel type indicator.

In some embodiments, the computer implemented method further comprises analyzing at least one of the at least one 2D pattern piece, the 3D garment model, and the at least one 3D panel model with respect to boundaries to provide panel boundary parameters, wherein determining the at least one candidate from the plurality of garment finish presets is further based on the panel boundary parameters.

In some embodiments, the computer implemented method further comprises, upon a user selection of the candidate or one of the candidates, applying the according garment finish preset to the garment model or assembling the garment model based on the at least one 2D pattern piece and the according garment finish preset.

In some embodiments, the computer implemented method further comprises, upon a computer selection of the candidate or one of the candidates, applying the according garment finish preset to the garment model or assembling the garment model based on the at least one 2D pattern piece and the according garment finish preset, wherein the computer selection is subject to a suitability likelihood value determined by matching the panel boundary parameters with panel boundary counter-parameter associated with each of the plurality of garment finish presets.

In some embodiments, each of the garment finish presets comprises at least one garment finish part, and wherein applying or assembling comprises at least one of resizing and reshaping the at least one garment finish part of the selected candidate such that the resized at least one garment finish part is adapted to at least one of a shape and a size of the garment model.

In some embodiments, each of the garment finish presets has at least one tag indicative for a requirement or suitability feature of the 3D garment model for applying the according garment finish preset.

In some embodiments, the at least one tag is indicative for a necessary or suitable
opening type, slit, boundary profile, opening circumference, dimension, or pocket spot
to be identified in the at least one 2D pattern piece, the 3D garment model, or the at least one 3D panel model.

### FURTHER ASPECTS OF THE DISCLOSURE

The invention further relates to a first computer implemented method, with program code being stored on a machine readable medium or embodied as an electromagnetic wave, for automatically generating a first 3D garment model representing a first garment to be fabricated from first garment panels, the computer implemented method comprising: (a) providing one or more first documents comprising a plurality of first 2D pattern pieces representing the first garment panels, (b) determining with a pattern recognition algorithm (i) a garment type indicator for at least one of the first 2D pattern pieces, the garment type indicator representing a type of a garment that the respective first garment panel belongs to and being one of a plurality of garment type indicators stored on the machine readable medium, and (ii) a panel pose indicator for each of the first 2D pattern pieces, the panel pose indicator representing an estimated position and an estimated orientation of the respective garment panel within the first garment, and (c) generating the first 3D garment model based on the first 2D pattern pieces, the at least one garment type indicator, and the panel pose indicators.

In an embodiment, the first computer implemented method further comprises adding default finishes to the first 3D garment model based on at least one of the at least one garment type indicator and the panel pose indicators.

In an embodiment, the first computer implemented method further comprises generating a first 2D panel model for each of the first 2D pattern pieces, wherein generating the first 3D garment model is based on draping a reference object with the first 2D panel models.

In an embodiment, the first computer implemented method further comprises: (a) positioning and orienting the first 2D panel models based on the panel pose indicators, in particular further based on a proportion of the 2D pattern pieces relative to each other, (b) while, before, or after positioning and orienting the 2D panel models, shaping each of the first 2D panel models into first 3D panel models so as they adapt to a shape of the reference object based on the at least one garment type indicator, and the panel pose indicators, and (c) generating the first 3D garment model by virtually assembling the first 3D panel models along their respective edges.

In an embodiment of the first computer implemented method, for determining a garment type indicator and the panel pose indicator, the pattern recognition algorithm is configured for analyzing at least one of (a) a shape of the 2D pattern piece, (b) a proportion of the 2D pattern piece relative to the other 2D pattern pieces, (c) textual information associated with the 2D pattern piece in the respective first document, (d) whether the 2D pattern piece is at least in part symmetrical or not, and (e) an amount of provided 2D pattern pieces.

The invention further relates to a second computer implemented method, with program code being stored on a machine readable medium or embodied as an electromagnetic wave, for virtually finishing a second 3D garment model representing a second garment to be fabricated without finishes or with default finishes, the computer implemented method comprising: (a) providing the second 3D garment model, (b) providing one or more second documents comprising human-readable garment finishing instructions for finishing the second garment, (c) determining with an extraction algorithm at least one garment finish feature from the one or more second documents, the garment finish feature corresponding to an additional garment component or a garment property and being indicative for a position and an orientation of the respective additional garment component or garment property within the second garment, and (d) virtually finishing the second 3D garment model based on the determined at least one garment finish feature.

In an embodiment of the second computer implemented method, virtually finishing the second 3D garment model comprises modifying at least a part of the second 3D garment model.

In an embodiment of the second computer implemented method, the garment finish feature corresponds to a fabric type of at least part of the second 3D garment model, wherein modifying the at least a part of the second 3D garment model comprises attributing at least one of a texture and a color to at least part of the second 3D garment model based on the garment finish feature.

In an embodiment of the second computer implemented method, the garment finish feature corresponds to seams of the second garment, wherein modifying at least a part of the second 3D garment model comprises attributing at least one of a thread color, a thread type, and a stitch pattern to seams of the second garment.

In an embodiment of the second computer implemented method, virtually finishing the second 3D garment model comprises adding at least one garment finish model to the second 3D garment model.

In an embodiment of the second computer implemented method, the garment finish feature corresponds to seams of the second garment, wherein the at least one garment finish model represents stitches to be placed at dedicated locations within the second garment.

In an embodiment of the second computer implemented method, the garment finish feature corresponds to bindings of the second garment, wherein the at least one garment finish model represents hems to be placed at openings of the second garment.

In an embodiment of the second computer implemented method, the garment finish feature corresponds to a closure of the garment, wherein the at least one garment finish model represents at least one of a button, a buttonhook, a snap fastener, a zipper, a touch fastener, a magnetic fastener, a hook, a loop for a hook or a button, a cord fastener, and laces.

In an embodiment of the second computer implemented method, for determining the at least one garment finish feature, the extraction algorithm is configured for analyzing the one or more second documents with respect to at least one of: textual information, image data, arrows, size data, color swatches, color indicators, stitch types, and stitch designations.

The invention further relates to a third computer implemented method, with program code being stored on a machine readable medium or embodied as an electromagnetic wave, for automatically generating a plurality of third 3D garment models in a batch process, each third 3D garment model representing a third garment to be fabricated from third garment panels, the computer implemented method comprising: (a) for each third 3D garment model to be generated: (i) providing one or more third documents comprising (i1) a plurality of third 2D pattern pieces representing the third garment panels and (i2) human-readable garment finishing instructions for finishing the third garment, (ii) recognizing patterns of the third 2D pattern pieces, (iii) generating a fourth 3D garment model based on the recognized patterns of third 2D pattern pieces, (iv) extracting at least one garment finish feature from the human-readable garment finishing instructions, (v) generating a third 3D garment model by virtually finishing each of the fourth 3D garment models based on the extracted at least one garment finish feature; and (b) for the batch-processed plurality of third 3D garment models, generating a report comprising statistics about at least one of: (i) whether a fourth 3D garment model could be generated for each of the third 3D garment models to be generated, (ii) which of the fourth 3D garment models could be generated, (iii) for each of the fourth 3D garment models that could be generated, a level of confidence that it was generated correctly, (iv) which of the fourth 3D garment models could not be generated, (v) which of the fourth 3D garment models could be generated only in part and to what extent, (vi) whether a third 3D garment model could be generated from each of the fourth 3D garment models, (vii) which of the third 3D garment models could be generated, (viii) for each of the third 3D garment models that could be generated, a level of confidence that it was generated correctly, (ix) which of the third 3D garment models could not be generated, and (x) which of the third 3D garment model could be generated only in part and to what extent.

In an embodiment of the third computer implemented method, recognizing patterns of the third 2D pattern pieces is based on determining with a pattern recognition algorithm (a) a garment type indicator for at least one of the third 2D pattern pieces, the garment type indicator representing a type of a garment that the respective third garment panel belongs to and being one of a plurality of garment type indicators stored on the machine readable medium, and (b) a panel pose indicator for each of the third 2D pattern pieces, the panel pose indicator representing an estimated position and an estimated orientation of the respective garment panel within the third garment, wherein generating the fourth 3D garment model is further based on the garment type indicator and the panel pose indicator.

In an embodiment of the third computer implemented method, the pattern recognition algorithm is trainable based on at least one of the generated report and user feedback.

In an embodiment of the third computer implemented method, extracting at least one garment finish feature is based on determining with an extraction algorithm the at least one garment finish feature from the one or more third documents, the garment finish feature corresponding to an additional garment component or a garment property and being indicative for a position and an orientation of the respective additional garment component or garment property within the third garment.

In an embodiment of the third computer implemented method, for determining the at least one garment finish feature, the extraction algorithm is configured for analyzing the one or more third documents with respect to at least one of: textual information, image data, arrows, size data, color swatches, color indicators, stitch types, and stitch designations.

In an embodiment of the third computer implemented method, the extraction algorithm is trainable based on at least one of the generated report and user feedback.

In other words, certain embodiments of the first, second, and third methods may be circumscribed as follows:
The first method starts by characterizing the pattern pieces, which means that it is identified 1) what the piece is, 2) where it goes on the human body (avatar) and at what rotation. Knowing what the piece is and where it goes on the avatar simplifies the next step which is to automatically assemble the garment. There are many fewer potential assembly scenarios when it is known what pieces are near what other pieces. The first method could be considered describing a trained expert system that is used to characterize the pieces. However, it is also possible to make use of an algorithmic approach that uses information such as the text on the piece, the shape of the piece, the size, whether it is symmetrical, the number of discrete segments, etc. In any case, the different shapes that belong to a garment are recognized, it is determined what each pattern piece is, and where it is located on the body. From this, the assembly of the garment into a 3D shape is automated. This 3D model may then be used to extend or amend the design with help of a Graphical User Interface (GUI).
The second method allows to look for relevant text in a document describing garment assembly instructions, e.g. a PDF, the relevant text relating to garment finishes (stitches, hems, neckline, waist, closures etc.). This information is extracted and related to a 3D garment digital twin that so far does not have finishes or only default finishes. This means that for example an Excel spreadsheet or PDF is searched for key information which are then extracted automatically and applied to the 3D digital version of the garment in the form of a garment opening (neck, sleeve, waist etc.), the colors of the garment to produce for the different pieces, the fabric type, the trims etc. Further, images, arrows, size tables, color swatches or indicators, stitch types or designations may be extracted and be converted into garment components and/or properties that can be applied to the 2D panels and/or the 3D model to produce a virtual finished garment.
The third method realizes an automated "Garment Digital Twin" (GDT) creation from a list of patterns (e.g. DXF file) and a corresponding "Tech Pack" (e.g. PDF files describing the garment in human readable form) for each of the single patterns. The GDTs are automatically created in a batch mode indicating the success or failure of each conversion. The batch processing mode comprises reading a series of documents that may be organized by garment style. Each set of documents that define a garment is read in and then converted to a 3D digital twin without the need for any user interaction. At the end, the user is provided with a report of all the garments converted and a status if the garment converted successfully and the confidence level that a correct conversion has been performed. This will allow businesses active in the garment industry to convert huge amounts of garments overnight and then edit or correct the areas where the garment conversion did not succeed.

### BRIEF DESCRIPTION OF THE DRAWINGS

By way of example only, preferred embodiments of the invention will be described more fully hereinafter with reference to the accompanying figures, wherein:
Figure 1 shows an exemplary first document or at least a part of a third document;
Figure 2 shows an embodiment of preliminarily orienting and positioning 2D panel models on their dedicated poses within an avatar as a preparation for the virtual garment assembly;
Figure 3 shows an embodiment of pre-shaping 2D panel models into 3D panel models as a preparation for the virtual garment assembly;
Figure 4 shows an exemplary second document or at least a part of a third document;
Figure 5 shows an embodiment of finishing a 3D garment model that has no finishes yet based at least in part on the document as shown in figure 4;
Figures 6-10 show an exemplary garment finish preset generation process;
Figures 11-13 show another exemplary garment finish preset generation process;
Figure 14 shows an exemplary automatic garment finish preset generation process.
Figures 15-16 show an exemplary garment finish preset retrieval and application process;
Figures 17-18 show another exemplary garment finish preset retrieval and application process;
Figures 19-20 show yet another exemplary garment finish preset retrieval and application process; and

### DETAILED DESCRIPTION OF THE DRAWINGS

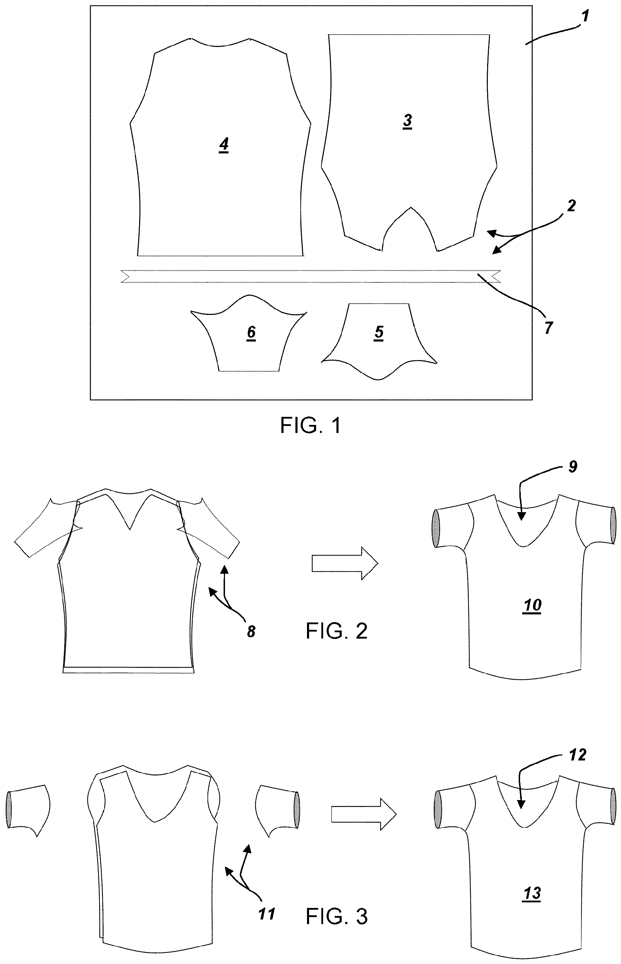

Figures 1 to 3 show aspects that are used in the first computer implemented method as presented herein. The purpose of this method is to automatically generate a first 3D garment model such that it represents a first garment that is to be fabricated in reality from first garment panels.

With the first method it is therefore proposed to provide one or more first documents 1 which comprise a plurality of first 2D pattern pieces 2 that represent those the first garment panels. These documents could be a Computer Aided Design (CAD) file, a Portable Document Format (PDF) file, an image file in any format, or any other file containing computer-readable or human-readable 2D shapes of pattern pieces. In the shown example, the 2D pattern document 1 contains representations of the front and back panels of a T-shirt (3 and 4), the sleeve panels 5 and 6, and a neck binding (or neck tape) 7.

According to the invention, a garment type indicator for at least one of the first 2D pattern pieces 2 is determined with a pattern recognition algorithm. The garment type indicator represents a type of a garment that the respective first garment panel(s) belong(s) to. In this case, the pattern recognition algorithm detects that this document 1 belongs to a T-shirt because a typically shaped panel and/or a typical collection of typically shaped panels was detected.

The determined garment type indicator is one of a plurality of garment type indicators stored on the machine readable medium. For example, the garment type indicators can refer to the type of garment on a very basic level, like a T-shirt, pants, underwear, etc., but it can alternatively or additionally also refer to the type of garment on a more detailed level, like long-sleeved shirt or short-sleeved shirt, ladieswear or menswear, dressed or denim, suit pants or 5-pocket, etc.

Furthermore, a panel pose indicator is determined with the pattern recognition algorithm for each of the first 2D pattern pieces. The panel pose indicator represents an estimated position and an estimated orientation of the respective garment panel within the first garment. For example, the algorithm will identify a panel with the shape of the back piece 4 to be located in the back with the long straight line at the bottom. It will further identify the front piece 3 to be located in the front but turned around such that again the long straight line is at the bottom and the neck part in the top. The first 3D garment model is now generated based on the first 2D pattern pieces, the at least one garment type indicator, and the panel pose indicators.

Figures 2 and 3 show two examples of this positioning and orienting. These two ways of assembly can be complementing or be applied alternatively.

According to what is shown in figure 2, the first method may further comprise the generation of a first 2D panel model 8 for each of the first 2D pattern pieces 2, which are positioned and oriented in accordance with the panel pose indicators, wherein for generating the first 3D garment model 10, a reference object 9 is draped with the first 2D panel models 8. In the shown example, the reference object 9 is an invisible or transparent avatar having an average shape of a human body, in particular in accordance with the garment type indicator (woman/man/child, etc.).

According to what is shown in figure 3, the single components for the first 3D garment model 12 may be represented by first 2D panel models which are then pre-shaped before the final assembly to form first 3D panel models 11. As shown, each sleeve is wrapped around, e.g. to form a tube as shown, and sewed together, and the front and back panel are shaped following a typical chest and back form. In this way, assembling these first 3D panel models 11 to form a first 3D garment model 13 is straightforward because fewer computational effort is necessary to find the lines of connection (seams).

The first 3D garment model 13 is shown on a transparent avatar 12, but the reference object can also be a garment hanger or any other holder that presents the garment in such a way that a designer can easily work on the garment design in a CAD environment. The reference object can be two- or three-dimensional.

In summary, the first method may further comprise said positioning and orienting of the first 2D panel models 8 based on the panel pose indicators, in particular further based on based on a proportion of the first 2D pattern pieces 2 relative to each other. If also said proportion is taken into account, then the panels can be positioned and oriented already quite closely to each other (because the general size of the garment can be estimated) such that the rendering of the assembly is made more efficient.

While, before, or after said positioning and orienting the 2D panel models 8, the first method may include shaping each of the first 2D panel models 8 into first 3D panel models 11 so as they adapt to a shape of the reference object 13 (in the respective area) based on the at least one garment type indicator, and the panel pose indicators. Thus, according to a respective garment type indicator (in this case: a T-shirt), the first method may take into account information (which may be stored on the computer-readable medium) about the typical 3D shape of the respective panel.

Eventually, the first 3D garment model 13 is generated by virtually assembling the first 3D panel models 11 (which are the shaped first 2D panel models 8) along their respective edges. In particular, the first 2D or 3D panel models are virtually stitched together a default allowance away from the edges, wherein models of default seams can be provided at the virtual stitch lines.

In general, the first method may provide adding default finishes to the first 3D garment model based on the respective garment type indicator and/or the panel pose indicators. For example, in the awareness that the present garment is a T-shirt, the first 3D garment model 10/13 might be equipped with standard French seams, wherein in case of a jeans the method might equip the first 3D garment model with a standard lapped seam.

In an embodiment of the first computer implemented method, for determining a garment type indicator and the panel pose indicator, the pattern recognition algorithm is configured for analyzing at least one of (a) a shape of the 2D pattern piece, (b) a proportion of the 2D pattern piece relative to the other 2D pattern pieces, (c) textual information associated with the 2D pattern piece in the respective first document, (d) whether the 2D pattern piece is at least in part symmetrical or not, and (e) an amount of provided 2D pattern pieces.

A particular advantage of said first method is that the first 3D garment model is fully automatically generated without the need of manual intervention, based on merely the at least one first document with its depiction or description of the first 2D pattern pieces that represent the first garment panels from which the first garment is to be fabricated.

The first method, in particular the pattern recognition algorithm, may be trainable based on machine learning using training data from previous first 3D garment model generations. Specifically, such a machine learning algorithm can "learn" from user input that is aimed at correcting the automatic choices made by the computer.

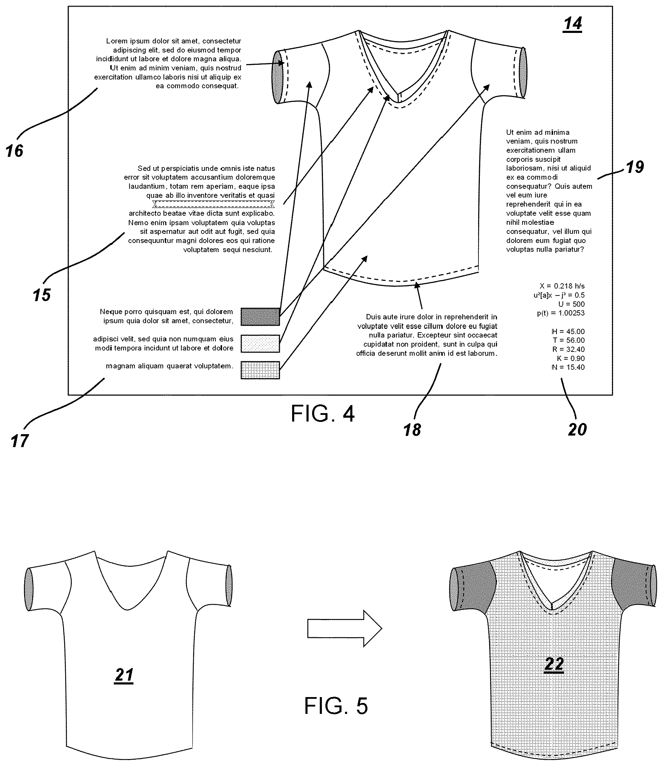

Figures 4 and 5 show aspects that are used in the second computer implemented method as presented herein. The purpose of this method is to virtually finish a second 3D garment model which represents a second garment to be fabricated in reality and which does not yet have finishes or merely has default finishes.

With the second method it is therefore proposed to provide said second 3D garment model that has no or only default finishes and to further provide one or more second documents which comprise human-readable garment finishing instructions for finishing the second garment. One exemplary such document 14, often referred to as "Tech Pack" among experts, is shown in figure 4. These one or more second documents describe how a certain garment is to be finished. As such, the document may refer to several garment finish features, such as the type of fabric to be used, the color to be chosen for a specific component, the stitch type and a hem type to fabricate at an opening, the addition of certain elements, as well as further parameters and description that instruct a sewer to finish the garment. The instructions in such documents address humans and not machines. In the shown example of figure 4, the single garment finish features are pointed at with arrows and described with text, parameters, references to 2D patterns, and/or samples.

The second method provides an extraction algorithm that is configured to determine at least one such garment finish feature from the one or more second documents. Said garment finish feature corresponds to an additional garment component and/or a garment property, and is indicative for a position and an orientation of the respective additional garment component or garment property within the second garment. Therefore, the extraction algorithm specifically extracts all the information necessary to finish the garment as is provisioned in the second document(s). In particular, the extraction algorithm is configured to interpret the human-readable instructions and illustrations to establish the garment finish features.

The second 3D garment model is then virtually finished based on the determined at least one garment finish feature. Specifically, the second method may retrieve stored elements (e.g. 3D models of zippers or 2D models of seams) and/or model appearances (texture, color, etc.) in order to modify the second 3D garment model 21 (see figure 5) to form a finished second 3D garment model 22. In particular, the second method provides interpretations of garment finish features based on training data as to how and where the second 3D garment model 21 is to be modified in order to arrive at the finished second 3D garment model 22. Thus, when the garment finish feature corresponds to a fabric type 17 of at least part of the second 3D garment model, the at least part of the second 3D garment model is modified by attributing at least one of a texture and a color to at least part of the second 3D garment model based on the garment finish feature.

If the garment finish feature corresponds to seams of the second garment (see for example reference 18), the at least part of the second 3D garment model is modified by attributing at least one of a thread color, a thread type, and a stitch pattern to seams of the second garment.

Virtually finishing the second 3D garment model 21 may as mentioned also comprise adding at least one garment finish model to the second 3D garment model. For example, as shown in figure 4, the V-neckline is hemmed with an added neck tape (see reference 7 in figure 1) referred to in the text 15 pointing at the neckline. In other embodiments, the neckline may be a boundary for further shaping the upper edge of the garment with a collar, cowl, darts, or pleats.

If the garment finish feature corresponds to seams of the second garment, the at least one garment finish model may represent stitches to be placed at dedicated locations within the second garment, see reference 15, 16, and 18 in figure 4. If the garment finish feature corresponds to bindings of the second garment (see reference 18), the at least one garment finish model may represent a hem to be placed at the lower opening of the second garment. Therefore, in the given example of figure 5, the bottom edge of the second 3D garment model 21 is turned down (or just shortened for the sake of visualization) and virtually stitched.

In an embodiment of the second computer implemented method, the garment finish feature may also correspond to a closure of the garment (not the case in the shown example), wherein the at least one garment finish model represents at least one of a button, a buttonhook, a snap fastener, a zipper, a touch fastener, a magnetic fastener, a hook, a loop for a hook or a button, a cord fastener, and laces.

Specifically, for determining the at least one garment finish feature, the extraction algorithm may be configured for analyzing the one or more second document 14 with respect to at least one of: textual information 15-19, image data, arrows, size data 20, color swatches 17, color indicators, stitch types, and stitch designations. The algorithm may be trained to search the second document(s) 14 for keywords, known patterns in describing a garment finish feature, arrows (especially the alignment of arrows), numeric values (especially typical number ranges), and so on.

Specifically, the second 3D garment model 21 may be an assembly of a plurality of second 3D pattern pieces representing second garment panels that the second garment is to be fabricated from, i.e. just as it is established as first 3D garment model by the first method described above. This first 3D garment model lacks finishes or is equipped with default finishes because it is based on the first 2D pattern pieces comprised by the first document which is usually silent about how the panels are to be assembled.

In a special embodiment, the third method as presented herein is a combination of the first and second method. However, more generally speaking, the purpose of the third method is to automatically generate a plurality of third 3D garment models in a batch process, each third 3D garment model representing a third garment to be fabricated from third garment panels. According to the third method, for each third 3D garment model to be generated, one or more third documents are provided. Said third document(s) comprise(s) a plurality of third 2D pattern pieces representing the third garment panels and human-readable garment finishing instructions for finishing the third garment. Hence, just as for the assembly process in reality, the garment patterns and corresponding instructions ("Tech Pack") are provided.

The patterns of the third 2D pattern pieces are then automatically recognized, based on which a fourth 3D garment model is generated. From the human-readable garment finishing instructions, at least one garment finish feature is extracted, based on which third 3D garment model is generated by virtually finishing each of the fourth 3D garment models. Even if the nomenclature suggests otherwise, the fourth 3D garment model is a "work-in-progress" and is predecessor to the third 3D garment model.

After a plurality of third 3D garment models have been batch-processed, a report is generated which is indicative for at least one of: (i) could all third documents be translated into fourth 3D garment models? (ii) specifically which of the fourth 3D garment models could be generated? (iii) with what level of confidence (likelihood of correctness) was each of the fourth 3D garment models generated? (iv) specifically which of the fourth 3D garment models could not be generated? (v) which of the fourth 3D garment models could be generated only in part and to what extent (e.g. what part is missing)? (vi) could a third 3D garment model be generated from each of the fourth 3D garment models? (vii) which of the third 3D garment models could be generated? (viii) with what level of confidence (likelihood of correctness) was each of the third 3D garment models generated? (ix) which of the third 3D garment models could not be generated? and (x) which of the third 3D garment model could be generated only in part and to what extent (what part or feature is missing)?

The report may be used by a user to quickly find out about the unsuccessful or partly successful conversions in order to manually correct the respective models or give feedback to the computer (e.g. by confirming or rejecting the respective part of the report). The report and/or the manual corrections/user feedback may be used to further improve or train the pattern recognition, the extraction, and/or the virtual panel assembly.

Specifically, recognizing the patterns of the third 2D pattern pieces may be based on determining, with a pattern recognition algorithm, a garment type indicator for at least one of the third 2D pattern pieces and a panel pose indicator for each of the third 2D pattern pieces. Generating the fourth 3D garment model is further based on the garment type indicator and the panel pose indicator.

Said garment type indicator represents, or in other words: is indicative for, a type of a garment that the respective third garment panel belongs to. The garment type indicator may be selected from a plurality of garment type indicators stored on the machine readable medium. Said panel pose indicator representing, or in other words: is indicative for, an estimated or preliminary position and an estimated or preliminary orientation of the respective garment panel within the third garment.

Furthermore, the extraction of the at least one garment finish feature may be based on determining, with an extraction algorithm, the at least one garment finish feature from the one or more third documents, in particular from the human-readable garment finishing instructions for finishing the third garment. The garment finish feature corresponds to an additional garment component or a garment property and represents, or in other words: is indicative for, a position and an orientation of (a) the respective additional garment component or (b) the respective garment property within the third garment.

For determining the at least one garment finish feature, the extraction algorithm may be configured for analyzing the one or more third documents, in particular the human-readable garment finishing instructions for finishing the third garment, with respect to at least one of: textual information, image data, arrows, size data, color swatches, color indicators, stitch types, and stitch designations.

The one or more third documents that correspond to a single garment (for which the third 3D garment model is to be generated) may in particular be so-called "Tech Packs" with corresponding 2D patterns and assembly instructions. This could all be combined in one file or document, however, it may also be provided as two or more correlated files or documents.

It is noted that the text in figure 4 is dummy text (lorem ipsum) the only purpose of which is to indicate that in such a document there may be several text passages for assembly guidance and similar comments addressed to the human user, i.e. non machine-readable. Figure 4 shows an example for at least a part of a second document and for at least a part of a third document.

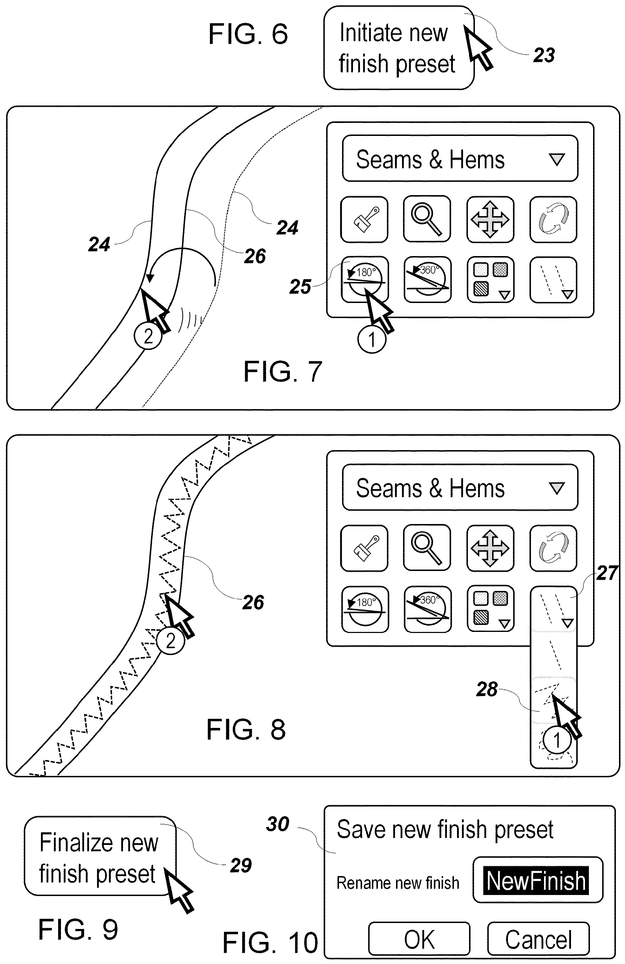

Figures 6-10 show an exemplary garment finish preset generation process. By clicking a button 23 with a mouse cursor, the process of generating a new finish preset is initiated. The design steps or assembly steps following the initiation are then tracked and sampled. Figure 7 then shows a first exemplary design step, wherein a garment panel edge 24 is folded by 180° which is initiated by clicking a design tool button 25 with the mouse cursor (1). Then (2), the amount of distance by which the edge 24 is folded can be determined by the mouse cursor drag-and-dropping the edge 24 at the desired location, which results in the hem edge 26. In a further step, as shown in figure 8, the stitch type can be chosen with the drop-down button 27. A variety of different stitch types is shown with dropped-down buttons, among which the user selects (1) the zig-zag pattern as per button 28. The user then (2) defines the location on the garment model where the zig-zag stitch should run, i.e. with what distance to the hem edge 26. With an exemplary button 29 (see figure 9), the user can end the sampling and finalize the finish preset. A prompt window 30 then shows up to save the preset under a desired name. The data or file containing the garment finish preset describes everything that is needed to assemble the finish, i.e. it comprises information about what finish parts are used (in the shown case: the thread to stitch the seam) and about what assembly steps are involved in manufacturing the finish from the finish parts (in the shown case: folding, length of overlap). This may comprise that each part involved is stored with different states for each assembly step, i.e. for example, in a first step a garment panel is unfolded, in a next step the same part is folded at a defined place, etc. They are the same piece but have different positions, orientations, and shapes depending on the commands the user has created to act upon them.

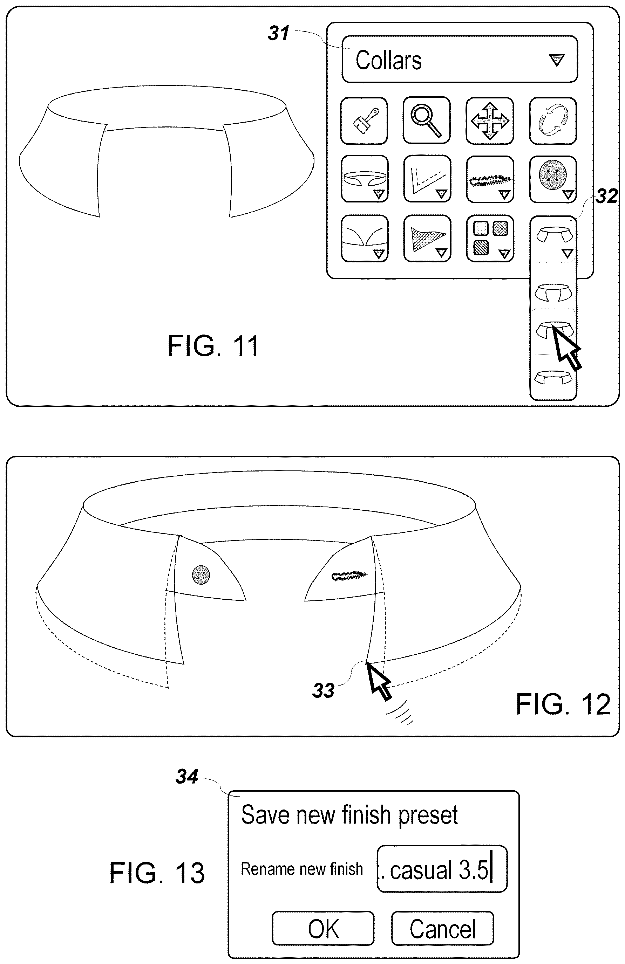

Figures 11-13 show another exemplary garment finish preset generation process, wherein a user assembles a customized collar made of several different finish parts. With the drop-down menu bar 31, category "Collars" is selected to display underneath it all available design tools related to collars. Different collar shapes can be selected with the button 32. Further options may be but are not limited to the neck band size or shape or style, stitch type, button hole type, button style, cloth type or color.

Figure 12 shows how the finish parts can be parametrically altered. For example, as shown, the user can click on the collar edge 33 and drag it to a different position to reshape the collar. The other side of the collar is altered in the same manner either simultaneously or afterwards in order to maintain symmetry. When the collar is complete, i.e. all belonging parts are selected and assembled, and all components have the desired style or shape, the user can trigger a "save as..." window 34 to store the preset under a desired name. What this saved file will contain is a computer-interpretable data collection of what finish parts are comprised by the garment finish preset and what assembly steps are involved in manufacturing the finish from the finish parts. The preset can be retrieved in a virtual 3D environment and can be applied, either manually or automatically, to a garment model which is also loaded into the virtual 3D environment.

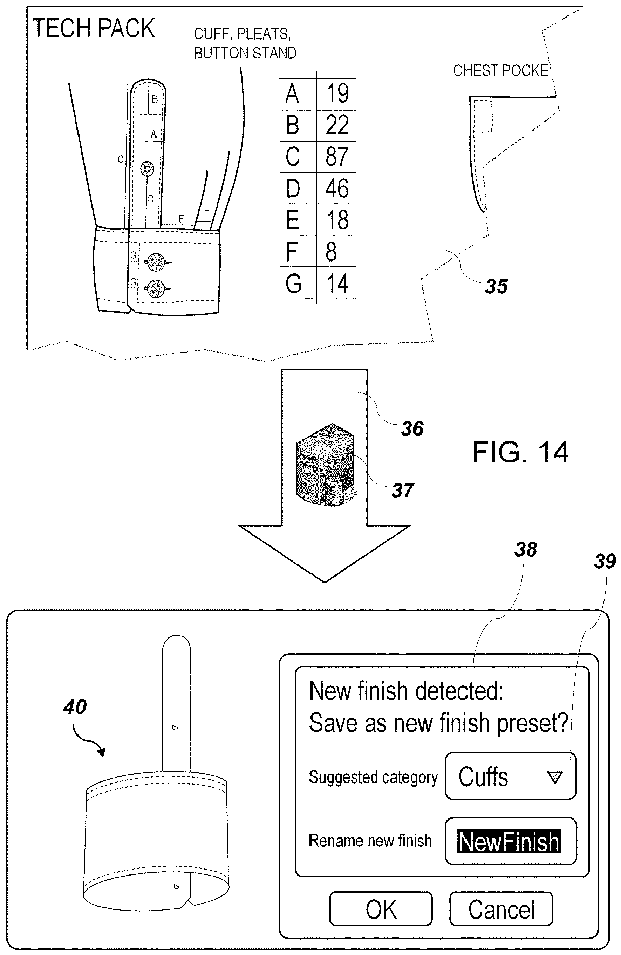

Figure 14 shows an exemplary automatic garment finish preset generation process based on documents as they are explained above in context of figure 4. Such documents, which are often referred to as "Tech Packs", usually comprise information on how a certain garment is to be finished and that information is exclusively meant for humans to read and understand (not for computers). Specifically, these documents usually comprise drawings, images, arrows, size data, color swatches, color indicators, stitch types, stitch designations (location), textual and/or numerical information that serve as instructions about how to manufacture the finish. As such, "Tech Packs" are often highly individual also with regards to the ways they express the contained information. An extraction algorithm automatically determines garment finish features based on the documents. More specifically, the extraction algorithm is trained, based on feedback and/or experience, to interpret drawings or images with respect to 2D/3D depiction. For example, the extraction algorithm can distinguish between 2D depictions and 3D depictions and extract the correct dimensions and/or proportions based on this recognition.

Referring to figure 14, the document 35 contains a drawing of a cuff next to a lookup table that refers to the respective dimensions of the cuff regions. The extraction algorithm 36 executed on a computer 37 is trained to analyze the drawing and the values in the table and translates the information into a garment finish preset, that can be saved, for example, after confirmation via the pop-up window 38. Optionally, the newly created preset can be linked to category and the window 38 may comprise a suggestion which can be overruled by the user in the box 39.

The newly created garment finish preset 40 can also be automatically displayed to support the user in deciding what finish it is and if every information available in the document was (correctly) interpreted by the extraction algorithm. To check every aspect of it (e.g. the buttons on the backside), the model 40 of the finish may be configured to be three-dimensionally rotatable in the virtual 3D environment. It is possible that, such as in the shown case, one single document contains more than one finish instruction (see the chest pocket next to the cuff). The extraction algorithm is particularly configured to distinguish between a plurality of different finishes and associate the available data correctly.

The extraction algorithm specifically extracts finish features from the drawing based on which the single finish parts of the finish are identified and used to virtually assemble the whole finish. The extraction algorithm may further be configured to identify, or interpret the garment finish features to determine a position and an orientation of the finish that it usually occupies within a garment.

In particular, when a preset is recorded for example like it was explained with figures 6-10 or with figures 11-13 or with figure 14, the respectively proposed computer implemented method may automatically associate counter-parameters or tags to the finish. For example, the hem preset as seen in figure 8 would be equipped with tags representing the presence of a boundary or sleeve or opening of a garment, as it would be applicable to such places. The collar as created in figure 12 would automatically be attributed with an indicator that this preset is applicable to an neck opening, and also generally, that it is suitable for shirts (garment type indicator). These kind of tags make it possible to identify a suitability and possibly also a degree of suitability (likelihood) when the designer or the software searches for applicable finishes. Even more specifically, when turning to the example of the cuff in figure 14, the edges of the cuff could also be assigned with counter-parameters or links or tags or attributes indicating where exactly it needs to be assembled with the sleeve of a shirt. However, these counter-parameters may also be added or defined manually by the user of the software. The above mentioned counter-parameters are labeled "counter" because they correspond to parameters comprised by the main garment. So, in a way, these parameters can be understood as tie points (panel boundary parameters) but potentially also as features that help to identify them.

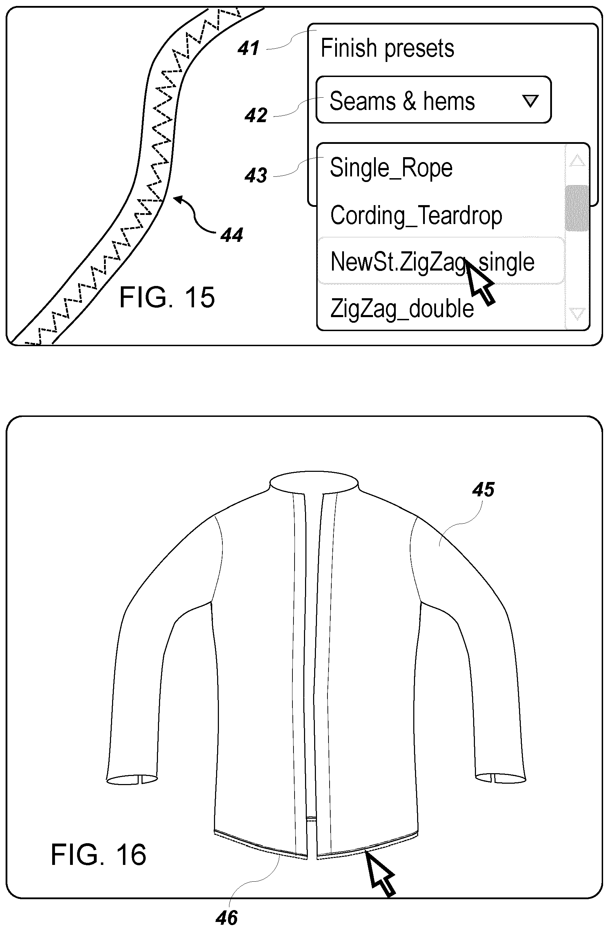

Figures 15-16 show an exemplary garment finish preset retrieval and application process. Let us suppose that the finish preset generated with the process described with figures 6-10 was saved under the name of "NewSt.ZigZag_single" and that the user can now retrieve this preset in the window 41 by first selecting a category of the desired element in the field 42 and then pick it among all the presets saved under this category. Next to the finish preset selection window, the GUI can provide a preview 44 of the finish. The next step is shown in figure 16: A garment 45 loaded into the virtual 3D environment can now be "equipped" with the selected finish, wherein the user needs to define the location within the garment model 45 where the finish shall be applied. He does this by selecting the bottom opening 46 of the shirt 45.

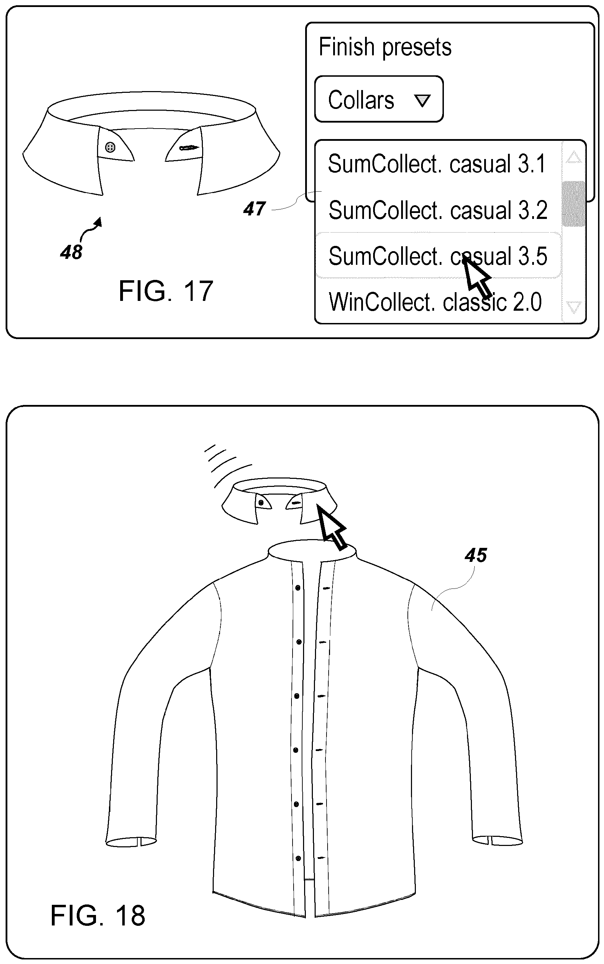

Figures 17-18 show another exemplary garment finish preset retrieval and application process. First, the category "Collars" is selected which causes the finish preset drop-down menu 47 to load all available collar presets. Let us once again suppose that the finish preset generated with the process described with figures 11-13 was saved under the name of "SumCollect. Casual 3.5" and that the user can retrieve this preset in the menu 47. A preview 48 may be loaded and displayed when hovering over the single presets. When clicked on, the selected collar is loaded into the virtual 3D environment where also the garment 45 has been designed before. The collar could be automatically inserted at the correct place, or, as in the shown case, it may be dragged by the user to the desired location, where it is, automatically or upon demand, assembled with the shirt 45.

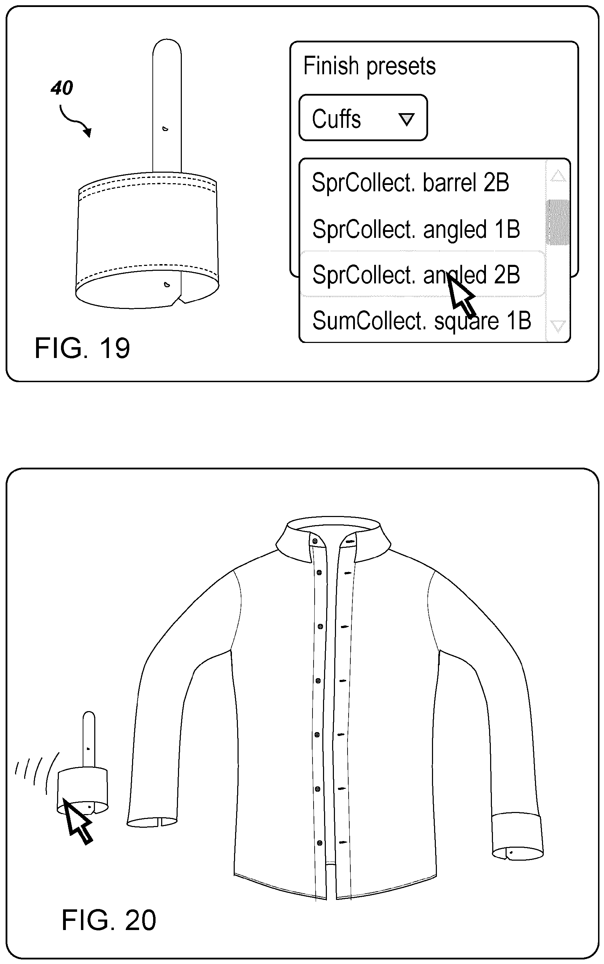

Finally, figures 19-20 show yet another exemplary garment finish preset retrieval and application process. This time, the cuff that was automatically generated from the tech pack (see figure 14 and corresponding description) is loaded into the virtual 3D environment, which again serves as GUI in that the cuff can be displaced by the cursor to be linked to the sleeve of the shirt.

Generally, according to at least some aspects of the present invention, a garment finish presets (generated in whatever way) can be suggested to a designer, i.e. a user of the virtual 3D environment of a garment design software, based on its suitability with a 3D garment model already at hand, or a 2D pattern set representing the panels that the respective garment is to be fabricated from.

The garment finish preset may be understood as a set of macros that can be applied across garments. In order to find out if one of a plurality of garment finish presets stored in a library is suitable for a present garment, the features of said garment shall be identified. That may include, but is not limited to, pieces types and segments types, e.g. based on detected outside boundaries.

In particular, the garment (which is either at hand already in 3D shape or to be assembled based on 2D pattern pieces) comprises parameters or "tags", that for example represent the existence of at least one of openings, other links, dimensions, locations of a specific feature, names, typical features that may be added at a specific location, garment category, etc.

Specifically, an indicator for the type of garment and an indicator for the type of the panels that the garment is comprised of are identified and based on the identified indicators, a list of suggested, likely suitable presets (candidates) is generated. For example, identifying a T-shirt and that the T-shirt has a short-arm sleeve, the software would present as a candidate garment finish preset a seam pattern for the shoulder area and for the hem of the sleeve. The identification algorithm would further identify the neck opening and thus trigger the suggestion of a neck binding, and so on.

It is highly likely that more than just one "candidate" for a suitable garment finish preset is found, which is why the computer implemented method may further provide a list of priorities, or a "ranking" so to speak, that provides a plurality of garment finish presets sorted after the likelihood of suitability, which may be derived by analyzing how many requirements are fulfilled in view of the garment at hand.

But the garment finish features contained by the suggestion list do not necessarily compete. For example, if the garment is identified as a shirt, it is determined that e.g. pockets, collars, cuff, neck binding, and slits are indeed suitable to be added to the garment. These finishes (pocket, collar, cuff, neck binding, slits) are detected based on said tags or parameters, i.e. each of the corresponding garment finish presets has a group of counter-parameters, and each group of these counter-parameters has an overlap with the group of parameters of the shirt model (or shirt pattern pieces). For each identified suitable garment finish preset (pocket, collar, cuff, neck binding, slits), one or more differently styled preset may be suggested. For that, even an analysis of style, shape, color, or cloth type me be undertaken to generate a list of priorities.

In any case, upon selecting a garment finish preset to be added or applied to a garment loaded into the virtual 3D environment, in accordance with embodiments, the parts contained by the preset are automatically resized (in particular also reshaped) to fit the places where they are added to the garment (e.g. the opening in case of a collar or cuff).

In case only a set of 2D pattern pieces is loaded (either only in the background, or indeed loaded into the virtual 3D environment), a garment finish preset may also refer to a more basic set of assembly instructions, e.g. a specific way how to sew the pieces of a T-shirt together. All information necessary to do so (type of sewing thread, color, type of seam, type of hems, etc.) are stored in the preset and automatically applied in the correct order to the T-shirt panels.

In particular embodiments, the garment finish features stored in the library can be understood as "user defined finishes" comprised of a reusable list of commands (like a macro) that allow the user to assemble a portion of the garment using a series of commands. The commands are things like: "fold a piece", "place a piece relative to another piece in this way", "sew two segments together", "create a piece of a certain size", "add a slit to a piece", "invert a piece", etc. These commands or instructions can be executed to assemble or adjust a finish on the garment model. The garment finish presets mirror the steps to some degree of the actual assembly of the garment component and can be applied to all garments that are identified to be suitable. For this identification, each piece and each segment (a continuous portion of the boundary), each drill point, notch point, and internal line may be given unique identifiers (parameters) that work across all similar garments. The orientation that a piece is to adapt should be consistent (for example a pocket bag), i.e. if e.g. a piece is folded according to a preset, the fold instruction has to assume the piece being oriented consistently so the fold will work the same way on all similar garments or pieces.

In other words, with the present invention, a new "language" is proposed that make predefined finishes "comprehensible" and applicable to a plurality of other same or similar type garments.

Although the invention is illustrated above, partly with reference to some preferred embodiments, it must be understood that numerous modifications and combinations of different features of the embodiments can be made. All of these modifications lie within the scope of the appended claims.

## Claims

1. A computer implemented method, with program code being stored on a machine readable medium or embodied as an electromagnetic wave, for generating a garment finish preset comprising assembly instructions for a garment finish for a garment to be fabricated, the computer implemented method comprising:
providing a virtual 3D environment with a graphical user interface (GUI) configured to receive first user input,
providing a plurality of design tools operatively linked with the virtual 3D environment and configured to receive second user input,
based on the first and second user input, generating the garment finish preset, wherein the second user input relates to what garment finish parts are comprised by the garment finish and what assembly steps are involved in manufacturing the garment finish from the garment finish parts, and wherein the first user input relates to parametrical alterations of the garment finish parts,
saving the generated garment finish preset, and
rendering the garment finish preset retrievable so that it is applicable to a garment model loaded into the virtual 3D environment.

2. The computer implemented method according to claim 1, further comprising
loading the garment model into the virtual 3D environment,
retrieving the garment finish preset, and
one of
loading into the virtual 3D environment a set of pre-assembled garment finish parts contained by the garment finish preset, and
virtually assembling the garment finish parts at a predefined or selected location within the garment model based on third user input, wherein the GUI is configured to receive the third user input, and wherein the third user input relates to where and how the garment finish parts is connected to the garment model.

3. The computer implemented method according to claim 1, comprising
initiating the generation of the garment finish preset by receiving an initiation input via the GUI or the design tools, wherein generating the garment finish preset is based on recording the first and second user inputs from the moment the initiation input is received, and
finalizing the generation of the garment finish preset by receiving a finalization input via the GUI or the design tools, wherein recording the first and second user inputs is stopped from the moment the finalization input is received.

4. The computer implemented method according to claim 3, wherein at least one of the design tool selection menus comprise one of a thread color selection menu, a stitch pattern selection menu, a size selection menu, a part selection menu, a cloth type selection menu, a cloth color selection menu, and a part style menu.

5. A computer implemented method, with program code being stored on a machine readable medium or embodied as an electromagnetic wave, for automatically generating a garment finish preset comprising assembly instructions for a garment finish for a garment to be fabricated, the computer implemented method comprising:
providing at least one document comprising at least one of a drawing and human-readable garment finishing instructions for finishing the garment,
determining, with an extraction algorithm, at least one garment finish feature from the at least one document, the garment finish feature corresponding to an additional garment component or a garment property,
generating a garment finish preset by translating the at least one garment finish feature into data that represent what garment finish parts are comprised by the garment finish and what assembly steps are involved in manufacturing the garment finish from the garment finish parts,
saving the generated garment finish preset, and
rendering the garment finish preset retrievable so that it is applicable to a garment model loaded into a virtual 3D environment.

6. The computer implemented method according to claim 5,
wherein generating the garment finish preset comprises virtually assembling the garment finish parts comprised by the garment finish preset based on the determined at least one garment finish feature,
or
comprising
loading a garment model into the virtual 3D environment,
retrieving the garment finish preset, and
one of
loading into the virtual 3D environment a set of pre-assembled garment finish parts contained by the garment finish preset, and
virtually assembling the garment finish parts at a predefined or selected location within the garment model.

7. The computer implemented method according to claim 5,
wherein the at least one garment finish feature is indicative for a position and an orientation of the respective additional garment component or garment property within a garment,
or
wherein the extraction algorithm comprises at least one of a pattern recognition algorithm and a text interpreter,
or
wherein the extraction algorithm is trainable based on user feedback,
or
wherein for determining the at least one garment finish feature, the extraction algorithm is configured for analyzing the at least one document with respect to at least one of: textual information, numerical information, image data, arrows, size data, color swatches, color indicators, stitch types, stitch designations, and a 2D/3D interpretation of the drawing.

8. The computer implemented method according to claim 5, comprising determining, with the extraction algorithm, a garment type indicator from the at least one document, the garment type indicator representing a type of the garment that the garment finish belongs to and being one of a plurality of garment type indicators stored on the machine readable medium.

9. The computer implemented method according to claim 8, wherein for determining a garment type indicator, the extraction algorithm is configured for analyzing at least one of
a shape depicted in the at least one drawing,
a technical term contained in the human-readable garment finishing instructions, and
at least one of textual and numerical information associated with the at least one drawing, and
whether the garment finish parts are symmetrical or not.

10. A computer implemented method, with program code being stored on a machine readable medium or embodied as an electromagnetic wave, for automatically determining at least one candidate from a plurality of garment finish presets, each of said garment finish presets comprising assembly instructions for a garment finish for a garment to be fabricated from garment panels, the computer implemented method comprising
providing at least one of
at least one document comprising at least one 2D pattern piece representing the garment panels and
a 3D garment model representing the garment and comprising at least one 3D panel model;
based on at least one of said at least one 2D pattern piece, said 3D garment model, and said at least one 3D panel model, determining with an identification algorithm
a garment type indicator representing a type of the garment and being one of a plurality of garment type indicators, and
at least one panel type indicator representing a type of the 2D pattern piece or representing a type of the 3D panel model;
determining the at least one candidate from the plurality of garment finish presets based on the determined garment type indicator and the at least one panel type indicator.

11. The computer implemented method according to claim 10, further comprising:
analyzing at least one of the at least one 2D pattern piece, the 3D garment model, and the at least one 3D panel model with respect to boundaries to provide panel boundary parameters, wherein determining the at least one candidate from the plurality of garment finish presets is further based on the panel boundary parameters.

12. The computer implemented method according to claim 10, further comprising:
upon a user selection of the candidate or one of the candidates, applying the according garment finish preset to the garment model or assembling the garment model based on the at least one 2D pattern piece and the according garment finish preset,
or
upon a computer selection of the candidate or one of the candidates, applying the according garment finish preset to the garment model or assembling the garment model based on the at least one 2D pattern piece and the according garment finish preset, wherein the computer selection is subject to a suitability likelihood value determined by matching the panel boundary parameters with panel boundary counter-parameter associated with each of the plurality of garment finish presets.

13. The computer implemented method according to claim 12, wherein each of the garment finish presets comprises at least one garment finish part, and wherein applying or assembling comprises at least one of resizing and reshaping the at least one garment finish part of the selected candidate such that the resized at least one garment finish part is adapted to at least one of a shape and a size of the garment model.

14. The computer implemented method according to claim 10, wherein each of the garment finish presets has at least one tag indicative for a requirement or suitability feature of the 3D garment model for applying the according garment finish preset.

15. The computer implemented method according to claim 14, wherein the at least one tag is indicative for a necessary or suitable
opening type,
slit,
boundary profile,
opening circumference,
dimension, or
pocket spot
to be identified in the at least one 2D pattern piece, the 3D garment model, or the at least one 3D panel model.
